Europäisches Patentamt

European Patent Office

Office européen des brevets

(19)

(11) **EP 1 686 149 A1**

(12) **EUROPEAN PATENT APPLICATION**
published in accordance with Art. 158(3) EPC

(43) Date of publication:
**02.08.2006 Bulletin 2006/31**

(51) Int Cl.:
*C08J 7/00* (2006.01)       *C08J 9/04* (2006.01)
*C08L 23/04* (2006.01)      *C08L 23/16* (2006.01)
*C08L 53/02* (2006.01)

(21) Application number: **04818547.4**

(22) Date of filing: **16.11.2004**

(86) International application number:
**PCT/JP2004/016978**

(87) International publication number:
**WO 2005/047375 (26.05.2005 Gazette 2005/21)**

(84) Designated Contracting States:
**DE ES FR GB IT**

(30) Priority: **17.11.2003   JP 2003386316**

(71) Applicant: **JSR Corporation**
**Tokyo 104-8410 (JP)**

(72) Inventors:
• **KANAE, Kentarou,**
**c/o JSR Corporation**
**Tokyo 1048410 (JP)**

• **MAEDA, Minoru,**
**c/o JSR Corporation**
**Tokyo 1048410 (JP)**
• **HIGUCHI, Motoharu,**
**c/o JSR Corporation**
**Tokyo 1048410 (JP)**
• **KOUJINA, Junji,**
**c/o JSR Corporation**
**Tokyo 1048410 (JP)**

(74) Representative: **TBK-Patent**
**Bavariaring 4-6**
**80336 München (DE)**

(54) **MOLDED ARTICLE OF THERMOPLASTIC ELASTOMER COMPOSITION AND PROCESS FOR PRODUCING THE SAME**

(57)    A thermoplastic elastomer composition molded article excellent in elasticity and extremely low in permanent compression set is obtained.

A thermoplastic elastomer composition molded article obtained by electron beam irradiation of a molded article mainly comprising a thermoplastic elastomer composition in which a crystalline polyethylenic resin (2) and a conjugated diene-based block copolymer (3) form a three-dimensional network structure in a matrix comprising an ethylene·-α-olefin-based copolymer (1), and a production process of the thermoplastic elastomer composition molded article comprising mixing an ethylene·α-olefin-based copolymer (1), a crystalline polyethylenic resin (2) and a conjugated diene-based block copolymer (3), dynamically heat treating the resulting mixture to obtain a thermoplastic elastomer composition, molding the thermoplastic elastomer composition, and then, subjecting the resulting molded article to electron beam irradiation.

EP 1 686 149 A1

**Description**

Technical Field

The present invention relates to a thermoplastic elastomer composition molded article obtained by electron beam irradiation of a molded article mainly comprising a thermoplastic elastomer composition, and a process for producing the same.

Background Art

A dynamically crosslinked thermoplastic elastomer obtained from a copolymer of ethylene and an $\alpha$-olefin such as propylene and an olefin resin has flexibility, is excellent in rubber properties, and requires no vulcanizing step, so that a molded article can be obtained by injection molding, profile extrusion molding, calendering, blow molding or the like which is an ordinary method for molding a thermoplastic resin. For this reason, from the viewpoints of energy saving, resource saving and recyclability, the demand has recently increased as a use for a replacement for vulcanized rubber or a vinyl chloride resin in automotive parts, industrial products, electric and electronic parts, construction materials or the like.

However, it has many problems to be solved, such as a complicated production process, an expensive available crosslinking agent and limited uses because of contamination by the crosslinking agent used and the like.

Further, a foam obtained from such a dynamically crosslinked thermoplastic elastomer (for example, patent document 1 etc.) provides a rough foam structure because only parts of the olefin resin are expanded. Furthermore, outgassing occurs on a surface of the foam, so that the outer surface can not be kept smooth to cause inferior appearance.

Then, an olefinic uncrosslinked thermoplastic elastomer is also developed in which a crystalline polyethylenic resin and a conjugated diene-based block copolymer have a three-dimensional network structure in a matrix comprising an ethylene·$\alpha$-olefin-based copolymer (patent document 2). This elastomer is remarkably improved in permanent set caused by compression, compared to an ordinary uncrosslinked thermoplastic elastomer. However, even such an olefinic uncrosslinked thermoplastic elastomer has not been sufficiently satisfactory in permanent set caused by compression, because it has no crosslinked structure.

Further, such an olefinic uncrosslinked thermoplastic elastomer can be uniformly expanded. However, the resulting foam has the problem of increased permanent set caused by compression, because it has no crosslinked structure.

    [Patent Document 1] JP-A-6-73222
    [Patent Document 2] JP-A-2001-341589

Disclosure of the Invention

Object That the Invention Is to Solve

An object that the present invention is to solve is to obtain a thermoplastic elastomer composition molded article improved in permanent compression set and oil resistance, compared to a conventional thermoplastic elastomer composition molded article.

Means for Solving the Object

The present invention relates to a thermoplastic elastomer composition molded article characterized in that the thermoplastic elastomer composition molded article is obtained by electron beam irradiation of a molded article mainly comprising a thermoplastic elastomer composition in which a crystalline polyethylenic resin (2) and a conjugated diene-based block copolymer (3) form a three-dimensional network structure in a matrix comprising an ethylene·$\alpha$-olefin-based copolymer (1).

Secondly, the invention relates to the above-mentioned thermoplastic elastomer composition molded article, wherein the above-mentioned conjugated diene-based block copolymer (3) comprises (a) a crystalline ethylenic polymer block and (b) a block having higher compatibility with the ethylene·$\alpha$-olefin-based copolymer than compatibility with the crystalline polyethylenic resin.

Thirdly, the invention relates to the above-mentioned thermoplastic elastomer composition molded article, wherein the above-mentioned conjugated diene-based block copolymer (3) has the crystalline ethylenic polymer blocks at both ends thereof.

Fourthly, the invention relates to the above-mentioned thermoplastic elastomer composition molded article described in any one of claims 1 to 3, wherein the above-mentioned conjugated diene-based block copolymer (3) is obtained by hydrogenating a conjugated diene-based block copolymer in which both end blocks thereof are the following block A and an intermediate block is the following block B, when the sum of the block A and the block B is taken as 100% by mass, the block A is from 5 to 90% by mass and the block B is from 10 to 95% by mass, at least 80% of all double bonds contained in the conjugated diene-based block copolymer (3) before hydrogenation is saturated, and the number average molecular weight thereof is from 50,000 to 700,000:

A; a butadiene polymer block having a 1,2-vinyl bond content of less than 25 mol%
B; a conjugated diene polymer block and/or a vinyl aromatic-conjugated diene copolymer block which have a 1,2-vinyl bond content of 25 mol% or more.

Fifthly, the invention relates to the above-mentioned thermoplastic elastomer composition molded article, wherein when the sum of the above-mentioned ethylene·α-olefin-based copolymer (1), the above-mentioned crystalline polyethylenic resin (2) and the above-mentioned conjugated diene-based block copolymer (3) is taken as 100% by mass, the ethylene·-α-olefin-based copolymer (1) is from 10 to 94% by mass, the crystalline polyethylenic resin (2) is from 5 to 80% by mass, and the block copolymer (3) is from 1 to 80% by mass.

Sixthly, the invention relates to the above-mentioned thermoplastic elastomer composition molded article, wherein when the sum of the above-mentioned ethylene·α-olefin-based copolymer (1), the above-mentioned crystalline polyethylenic resin (2) and the above-mentioned block copolymer (3) is taken as 100 parts by mass, a mineral oil type softening agent is contained in an amount of 200 parts by mass or less.

Seventhly, the invention relates to the above-mentioned thermoplastic elastomer composition molded article, wherein when the sum of the above-mentioned ethylene·α-olefin-based copolymer (1), the above-mentioned crystalline polyethylenic resin (2) and the above-mentioned block copolymer (3) is taken as 100 parts by mass, a crosslinking assistant is further added in an amount of 0.1 to 10 parts by mass to a thermoplastic elastomer composition (4).

Eighthly, the invention relates to the above-mentioned thermoplastic elastomer composition molded article, wherein the cyclohexane insoluble matter after electron beam irradiation is from 50 to 100% by mass.

Ninthly, the invention relates to the above-mentioned thermoplastic elastomer composition molded article, wherein the electron beam dose is from 100 to 2, 000, 000 (kV·kGy) as the product of the electron beam acceleration voltage (kV) and the irradiation dose (kGy).

Tenthly, the invention relates to the above-mentioned thermoplastic elastomer composition molded article which is at least one selected from the group consisting of a tube, a hose, a sheet, a film, a belt and a foam thereof.

Eleventhly, the invention relates to the above-mentioned thermoplastic elastomer composition molded article which is obtained by electron beam irradiation with rotation.

Twelfthly, the invention relates to a processed good obtained by processing the above-mentioned thermoplastic elastomer composition molded article.

Thirteenthly, the invention relates to a process for producing the above-mentioned thermoplastic elastomer composition molded article comprising mixing an ethylene·-α-olefin-based copolymer (1), a crystalline polyethylenic resin (2) and a conjugated diene-based block copolymer (3), dynamically heat treating the resulting mixture to obtain a thermoplastic elastomer composition, molding the thermoplastic elastomer composition, and then, subjecting the resulting molded article to electron beam irradiation.

Fourteenthly, the invention relates to the above-mentioned method for producing the thermoplastic elastomer composition molded article, wherein the molding is foam molding.

Advantages of the Invention

The present invention can provide a thermoplastic elastomer composition molded article extremely low in permanent compression set and has oil resistance and further scratch resistance.

Best Mode for Carrying Out the Invention

Embodiments of the present invention will be described in detail below.
In the thermoplastic elastomer composition molded article of the present invention a thermoplastic elastomer composition constituting a thermoplastic elastomer composition molded article before electron beam irradiation (hereinafter also referred to as a molded article before irradiation) contains an ethylene·α-olefin-based copolymer (1), a crystalline polyethylenic resin (2) and a conjugated diene-based block copolymer (3) as main components, and in a matrix comprising an ethylene·α-olefin-based copolymer (1), the crystalline polyethylenic resin (2) and the conjugated diene-based block copolymer (3) form a three-dimensional network structure.

The Above-Mentioned Ethylene·α-Olefin-Based Copolymer (1)

The above-mentioned ethylene·α-olefin-based copolymer (1) (hereinafter also briefly referred to as the "EAO-based copolymer (1) ") is a copolymer mainly containing ethylene and an α-olefin having 3 to 10 carbon atoms except ethylene. When the sum of ethylene and the α-olefin contained in the EAO-based copolymer is taken as 100 mol%, the ethylene content is preferably from 50 to 90 mol%. An ethylene content exceeding 90 mol% is liable to result in insufficient flexibility. On the other hand, less than 50 mol% is unfavorably liable to result in insufficient mechanical strength.

The α-olefins having 3 to 10 carbon atoms as used herein include propylene, 1-butene, 1-pentene, 4-methyl-pentene-1, 1-hexene, 1-heptene, 1-octene, 1-decene and the like. Above all, propylene, 1-butene, 1-hexene and 1-octene are preferred, and propylene and 1-butene are more preferred. These compounds can be used either alone or as a combination of two or more of them. The use of the α-olefin having 10 or less carbon atoms improves the copolymerizability of the α-olefin with other monomers.

Further, a non-conjugated diene may be contained in an amount of 0 to 10 mol% in the EAO-based copolymer (1) as needed.

Specific examples of the non-conjugated dienes include straight-chain noncyclic dienes such as 1,4-hexadiene, 1,6-hexadiene and 1,5-hexadiene, branched chain noncyclic dienes such as 5-methyl-1,4-hexadiene, 3,7-dimethyl-1,6-octadiene, 5,7-dimethylocta-1,6-diene, 3,7-dimethyl-1,7-octadiene, 7-methylocta-1,6-diene and dihydromyrcene, alicyclic dienes such as tetrahydroindene, methyltetrahydroindene, dicyclopentadiene, bicyclo[2.2.1]-hepta-2,5-diene, 5-methylene-2-norbornene, 5-ethylidene-2-norbornene, 5-propenyl-2-norbornene, 5-isopropylidene-2-norbornene, 5-cyclohexylidene-2-norbornene and 5-vinyl-2-norbornene, and the like.

These compounds can be used either alone or as a combination of two or more of them.

Further, of the above-mentioned non-conjugated dienes, preferred are 1,4-hexadiene, dicyclopentadiene, 5-ethylidene-2-norbornene and the like.

The Mooney viscosity [$ML_{1+4}$ (100˚C)] (the Mooney viscosity is hereinafter a value measured under the following conditions: rotor shape; type L, preheating time; 1 minute, rotor operating time; 4 minutes, test temperature; 100˚C) of these EAO-based copolymers (1) is preferably from 10 to 500, and more preferably from 30 to 400. When the Mooney viscosity is less than 10, mechanical strength and elastic recovery is liable to be reduced. On the other hand, exceeding 500 is unfavorably liable to result in decreased dispersibility of the crystalline polyethylenic resin (2).

The EAO-based copolymer (1) used in the present invention may be an oil-extended polymer to which a softening agent is added at the time of polymerization. Such an EAO-based copolymer (1) can be produced by a method described in Japanese Patent Application No. 2000-383320.

The Above-Mentioned Crystalline Polyethylenic Resin (2)

The above-mentioned crystalline polyethylenic resin (2) has ethylene as a main constituent, and the ethylene content is from 90 to 100 mol%. Further, the crystallinity of the crystalline polyethylenic resin (2) is preferably 10% or more. When the crystallinity is less than 10%, the mechanical strength of a weather strip obtained tends to deteriorate. Furthermore, the crystalline melting peak measured with a differential scanning calorimeter (DSC) is preferably 100˚C or higher. When the melting peak is lower than 100˚C, the heat resistance and permanent compression set of a weather strip obtained tend to deteriorate.

The crystalline polyethylenic resins (2) include polyethylene, a copolymer having an ethylene content of 90 mol% or more with an α-olefin having 3 to 6 carbon atoms such as propylene, butene-1,4-methyl-pentene-1, hexene-1 or octene-1, and the like. Of these, polyethylene may be a resin obtained by any one of the high-pressure process and the low-pressure process. These may be used as a mixture of two or more of them.

Conjugated Diene-Based Block Copolymer (3)

As the above-mentioned conjugated diene-based block copolymer (3), one having (a) a crystalline ethylenic polymer block and (b) a block having higher compatibility with the ethylene·α-olefin-based copolymer than compatibility with the crystalline polyethylenic resin is preferred.

The crystalline ethylenic polymer blocks (a) which a copolymer of the conjugated diene-based block copolymer (3) has include a copolymer having an ethylene content of 50% or more and an ethylene homopolymer.

Further, it is preferred that the conjugated diene-based blockcopolymer (3) has the crystalline ethylenic polymer blocks at both ends thereof. A uniform three-dimensional network structure can be particularly obtained by having the crystalline ethylenic polymer blocks at both ends like this. The three-dimensional network structure formed in the EAO-based copolymer usually mainly comprises the crystalline polyethylenic resins (2) and the conjugated diene-based block copolymer (3).

Further, it is preferred that the conjugated diene-based block copolymer (3) is obtained by hydrogenating a conjugated diene-based block copolymer in which both end blocks thereof are the following block A and an intermediate block is the following block B, that when the sum of the block A and the block B is taken as 100% by mass, the block A is from 5 to 90% by mass and the block B is from 10 to 95% by mass, that at least 80% of all double bonds contained in the conjugated diene-based block copolymer (3) before hydrogenation is saturated, and that the number average molecular weight thereof is from 50,000 to 700,000:

A; a butadiene polymer block having a 1,2-vinyl bond content of less than 25 mol%

B; a conjugated diene polymer block and/or a vinyl aromatic-conjugated diene copolymer block which have a 1,2-vinyl bond content of 25 mol% or more

The above-mentioned preferred conjugated diene-based block copolymer (3) is a block copolymer obtained by hydrogenating the copolymer (A-B-A type block copolymer) having the blocks A at both ends and the block B between the two blocks A. That is to say, each of the block A and the block B is a block before hydrogenation. When the sum of the block A and the block B in the conjugated diene-based block copolymer (3) is taken as 100% by mass, the content of the block A is preferably from 5 to 90% by mass (more preferably from 10 to 80% by mass). When the content of the block A is less than 5% by mass (the content of the block B exceeds 95% by mass), it is difficult to show relatively sufficient crystallinity to the EAO-based copolymer (1) which forms a matrix, resulting in difficulty of forming the three-dimensional network structure. On the other hand, when the content of the block A exceeds 90% by mass (the content of the block B is less than 10% by mass), hardness unfavorably excessively increases.

The above-mentioned block A is a 1,3-butadiene polymer block containing butadiene as a main component (90% by mass or more of the whole block A, preferably 95% by mass or more). Further, the 1, 2-vinyl group content of the block A is preferably less than 25 mol% (more preferably 20 mol% or less, and still more preferably 15 mol% or less). When the 1,2-vinyl group content of the block A is 25 mol% or more, the melting point of crystals after hydrogenation significantly decreases, resulting in the tendency to reduce mechanical strength. The number average molecular weight of the block A is preferably from 25, 000 to 630, 000 (more preferably from 100,000 to 480,000). In the conjugated diene-based block copolymer (3), the block A is hydrogenated to show a structure similar to that of low density polyethylene.

The above-mentioned block B is a conjugated diene polymer block containing a conjugated diene compound as a main component (50% by mass or more of the whole block B, preferably 60% by mass or more). The conjugated diene compounds include 1,3-butadiene, isoprene, 2,3-dimethyl-1,3-butadiene, 1,3-pentadiene, 2-methyl-1,3-pentadiene, 1,3-hexadiene, 4,5-diethyl-1,3-octadiene, 3-butyl-1,3-octadiene, chloroprene and the like. Above all, 1,3-butadiene, isoprene and 1,3-pentadiene are preferably used, and 1,3-butadiene is particularly preferably used. The block B may be constituted by two or more of them.

Further, the 1,2-vinyl group content of the block B is preferably 25 mol % or more (more preferably from 25 to 95 mol%, and still more preferably from 30 to 90 mol%). Less than 25 mol% results in giving resinoid properties to cause the tendency to reduce flexibility. Furthermore, the 1,2-vinyl group content contained in the block B exceeds the 1,2-vinyl group content of the block A. When the 1,2-vinyl group content is lower than that of the block A, the flexibility of the thermoplastic elastomer composition used in the present invention is liable to be reduced. The number average molecular weight of the block B is preferably from 5, 000 to 665, 000 (more preferably from 20,000 to 540,000).

Further, when a vinyl aromatic polymer block is contained in the block B, the content of the vinyl aromatic polymer block is preferably 35% by mass or less (more preferably 30% by mass or less, and still more preferably 25% by mass or less), taking the whole block B as 100% by mass. The glass transition temperature rises by allowing the vinyl aromatic polymer block to be contained, and low-temperature characteristics and flexibility are liable to be reduced. The block B is turned by hydrogenation into a polymer block showing a structure similar to that of a rubber-like ethylene·butene-1 copolymer block or vinyl aromatic compound·ethylene·butene-1 copolymer block.

The vinyl aromatic compounds include styrene, tert-butylstyrene, $\alpha$-methylstyrene, p-methylstyrene, p-ethylstyrene, divinylbenzene, 1,1-diphenylstyrene, vinylnaphthalene, vinylanthracene N,N-diethyl-p-aminoethyl-styrene, vinylpyridine and the like. Of these, styrene is preferred.

As for double bonds contained in the conjugated diene-based block copolymer (3) obtained after hydrogenation, it is preferred that at least 80% (more preferably 90% and still more preferably 95 to 100%) of all double bonds before hydrogenation are saturated. Less than 80% results in the tendency to reduce heat resistance and durability. The number average molecular weight of the conjugated diene-based block copolymer (3) is preferably from 50,000 to 700,000 (more preferably from 100,000 to 600,000). Less than 50,000 results in the tendency to reduce heat resistance, strength, fluidity and processability, whereas exceeding 700,000 results in the tendency to reduce fluidity, processability and flexibility.

The conjugated diene-based block copolymer (3) can be obtained, for example, by living anionic polymerization of the vinyl aromatic compound and the conjugated diene compound, or the vinyl aromatic compound, the conjugated diene compound and another monomer copolymerizable therewith, using an organic alkali metal compound as a polymerization initiator, in an inert organic solvent such as an aliphatic hydrocarbon solvent such as pentane, hexane, heptane or octane, an alicyclic hydrocarbon solvent such as cyclopentane, methylcyclopentane, cyclohexane or methylcyclohexane, or an aromatic hydrocarbon solvent such as benzene, xylene, toluene or ethylbenzene. The hydrogenated diene-based copolymer of the present invention can be easily obtained by hydrogenating this block copolymer (hereinafter also referred to as the "polymer before hydrogenation").

The organic alkali metal compounds used as the polymerization initiator include an organic lithium compound, an organic sodium compound and the like, and the organic lithium compound such as n-butyllithium, sec-butyllithium or tert-butyllithium is particularly preferred.

There is no particular limitation on the amount of the organic alkali metal compound used, and various amounts can be used as needed. However, the compound is normally used in an amount of 0.02 to 15% by mass, and preferably in an amount of 0.03 to 5% by mass, based on 100% by mass of monomers.

Further, the polymerization temperature is generally from -10 to 150°C, and preferably from 0 to 120°C. Furthermore, it is desirable that an atmosphere of a polymerization system is replaced by an inert gas such as a nitrogen gas. As for the polymerization pressure, the polymerization may be conducted within the range of pressure enough to maintain the monomers and the solvent to a liquid phase within the above-mentioned polymerization range, and the polymerization pressure is not particularly limited.

Further, in the course of polymerizing the copolymerized block containing the vinyl aromatic compound and the conjugated diene compound, methods for putting monomers of those compounds into a polymerization system are not particularly limited, and include a batch process, a continuous process, an intermittent process and a combined process thereof. Furthermore, when the copolymerized block containing the vinyl aromatic compound and the conjugated diene compound is polymerized, the amount of another compolymerizable component added, the amount of a polar material added, the number and kind of polymerization vessel and the above-mentioned method for putting the monomers into the polymerization system may be selected so that the physical properties of the resulting hydrogenated diene-based copolymer, the composition thereof, the molded article of the composition and the like become desirable.

The polymer before hydrogenation of the present invention may be a copolymer in which a coupling residue intervenes between the copolymer molecule chains using a coupling agent, after the block copolymers have been obtained by the above-mentioned method.

The coupling agents used include, for example, divinylbenzene, 1,2,4-trivinylbenzene, epoxidized 1,2-polybutadiene, epoxidized soybean oil, epoxidized linseed oil, benzene-1,2,4-triisocyanate, diethyl oxalate, diethyl malonate, diethyl adipate, dioctyl adipate, dimethyl phthalate, diethyl phthalate, diethyl terephthalate, diethyl carbonate, 1,1,2,2-tetrachloroethane, 1,4-bis(trichloromethyl)benzene, trichlorosilane, methyltrichlorosilane, butyltrichloro-silane, tetrachlorosilane, (dichloromethyl)trichlorosilane, hexachlorodisilane, tetraethoxysilane, tetrachlorotin, 1,3-dichloro-2-propanone and the like. Of these, divinylbenzene, epoxidized 1,2-polybutadiene, trichlorosilane, methyltrichlorosilane and tetrachlorosilane are preferred.

The hydrogenated diene-based copolymer of the present invention is obtained by partially or selectively hydrogenating the block copolymer obtained in the manner described above. There is no particular limitation on the hydrogenation method and reaction conditions, and the hydrogenation is usually conducted at 20 to 150°C under a hydrogen pressure of 0.1 to 10 MPa in the presence of a hydrogenation catalyst.

In this case, the hydrogenation rate can be arbitrarily selected by changing the amount of the hydrogenation catalyst, the hydrogen pressure at the time of hydrogenation reaction, or the reaction time. As the hydrogenation catalyst, there can be used a compound containing any one of the metals of the groups Ib, IVb, Vb, VIb, VIIb and VIII in the periodic table of the elements, for example, a compound containing a Ti, V, Co, Ni, Zr, Ru, Rh, Pd, Hf, Re or Pt atom. Specifically, the compounds include, for example, metallocene-based compounds of Ti, Zr, Hf, Co, Ni, Pd, Pt, Ru, Rh, Re or the like, a carrying type heterogeneous catalyst in which a metal such as Pd, Ni, Pt, Rh or Ru is carried on a carrier such as carbon, silica, alumina or diatomaceous earth, a homogeneous Ziegler type catalyst in which an organic salt or acetylacetone salt of a metal element such as Ni or Co is combined with a reducing agent such as organic aluminum, a fullerene or nanotube in which an organic metal compound or complex of Ru, Rh or the like and hydrogen are occluded, and the like. Of these, a metallocene compound containing any one of Ti, Zr, Hf, Co and Ni is preferred in that hydrogenation reaction can be conducted in a homogeneous system in an inert organic solvent. A metallocene compound containing any one of Ti, Zr and Hf is more preferred. In particular, a hydrogenation catalyst obtained by reacting a titanocene compound with an alkyllithium is preferred, because it is an inexpensive and industrially particularly useful catalyst. The above-mentioned hydrogenation catalysts may be used alone or as a combination of two or more of them. After hydrogenation, a residue of the catalyst is removed as needed, or a phenolic or amine-based antiaging agent is added. Then, the hydrogenated diene-based copolymer of the present invention is isolated from a hydrogenated diene-based copolymer solution. The isolation of the hydrogenated diene-based copolymer can be performed, for example, by a method of adding acetone, alcohol or the like to the hydrogenated diene-based copolymer solution to precipitate the copolymer, or a method of pouring the hydrogenated diene-based copolymer solution into boiling water with stirring to remove the solvent by distillation.

The conjugated diene-based block copolymer before hydrogenation of the conjugated diene-based copolymer (3) may contain a plurality of A-B-A type block copolymers connected by a coupling agent residue to each other. That is to say, it may be $[A-B-A-X]_n-(A-B-A)$ [wherein n represents an integer of 2 to 4, and X represents a coupling agent residue]. Further, the block copolymer before hydrogenation may be $[A-B-X]_n-(B-A)$ [wherein n represents an integer of 2 to 4, and X represents a coupling agent residue], when the molecular weight of the coupling agent residue is sufficiently small to those of the block A and the block B to be within the range in which it has no effect on crystallinity of the conjugated diene-based block copolymer (3). That is to say, when the relatively small coupling agent residue is described for brevity, it may be [A-B]$_n$-A.

Further, the conjugated diene-based block copolymer (3) may be a modified block polymer modified with a functional group. As the functional group, there can be used at least one selected from the group consisting of a carboxyl group, an acid anhydride group, a hydroxyl group, an epoxy group, a halogen group, an amino group, an isocyanate group, a sulfonyl group and a sulfonate group.

As a modification method, there can be used a known method.

The content of the functional group in the modified block polymer is preferably from 0.01 to 10 mol% (more preferably from 0.1 to 8 mol%, and still more preferably from 0.15 to 5 mol%), when the total amount of constituent units constituting the block polymer is taken as 100 mol%.

Preferred monomers available for introducing the functional group include acrylic acid, methacrylic acid, itaconic acid, maleic acid, maleic anhydride, glycidyl acrylate, glycidyl methacrylate, allyl glycidyl ether, hydroxyethyl methacrylate, hydroxypropyl methacrylate, hydroxyethyl acrylate, hydroxypropyl acrylate, dimethylaminoethyl methacrylate and the like.

In the present invention, the thermoplastic elastomer composition contains the above-mentioned ethylene·-$\alpha$-olefin-based copolymer (1), crystalline polyethylenic resin (2) and conjugated diene-based block copolymer (3) as main components, and the crystalline polyethylenic resin (2) and the conjugated diene-based block copolymer (3) form a three-dimensional network structure in a matrix comprising the ethylene·$\alpha$-olefin-based copolymer (1).

It is considered that the above-mentioned conjugated diene-based block copolymer (3) can connect the EAO-based copolymer (1) to the crystalline polyolefinic resin (2), so that the crystalline polyethylenic resin (2) and the conjugated diene-based block copolymer (3) can form the three-dimensional network structure in the EAO-based copolymer (1).

Thermoplastic Elastomer Composition

In the thermoplastic elastomer composition used for producing the molded article of the present invention, for the respective content ratios of the EAO-based copolymer (1), the crystalline polyethylenic resin (2) and the conjugated diene-based block copolymer (3), the EAO-based copolymer (1) is preferably from 10 to 94% by mass (more preferably from 20 to 94% by mass, still more preferably from 25 to 94% by mass and particularly preferably from 50 to 94% by mass), the crystalline polyethylenic resin (2) is from 5 to 80% by mass (preferably from 5 to 50% by mass, and more preferably from 5 to 30% by mass), and the conjugated diene-based block copolymer (3) is from 1 to 80% by mass (more preferably from 2 to 50% by mass, and particularly preferably from 3 to 30% by mass), when the sum of these three components is taken as 100% by mass.

When the content of the EAO-based copolymer (1) is less than 10% by mass, it is difficult to obtain the thermoplastic elastomer composition having sufficient elastic recovery. On the other hand, when it exceeds 94% by mass, it is difficult to obtain the thermoplastic elastomer composition having sufficient molding processability.

Further, when the content of the crystalline polyethylenic resin (2) is less than 5% by mass, it is difficult to obtain the thermoplastic elastomer composition having sufficient elastic recovery. On the other hand, when it exceeds 80% by mass, it is difficult to obtain the thermoplastic elastomer composition having sufficient elasticity.

Furthermore, when the content of the conjugated diene-based block copolymer (3) is less than 1% by mass, it is difficult to obtain the thermoplastic elastomer composition having sufficient elastic recovery. On the other hand, when it exceeds 80% by mass, it is difficult to obtain the thermoplastic elastomer composition having sufficient molding processability.

Further, when the EAO-based copolymer (1) is from 40 to 94% by mass (more preferably from 50 to 94% by mass) and the sum of the crystalline polyethylenic resin (2) and the conjugated diene-based block copolymer (3) is from 6 to 60% by mass (more preferably from 6 to 50% by mass), taking the sum of these three components as 100% by mass, and when the crystalline polyethylenic resin (2) is from 20 to 80% by mass (more preferably from 30 to 70% by mass), taking the sum of the crystalline polyethylenic resin (2) and the conjugated diene-based block copolymer (3) as 100% by mass, the three-dimensional network structure can be particularly stably obtained.

In the thermoplastic elastomer composition used for producing the molded article of the present invention, a crystalline and/or amorphous $\alpha$-olefinic polymer can be used together, whereby a surface of the resulting molded article can be more smoothened. The $\alpha$-olefin copolymer is preferably one comprising an $\alpha$-olefin having 3 or more carbon atoms as a main component, and examples thereof include polypropylene, polybutene-1, poly-4-methylpentene-1, polyhexene-1, a propylene-ethylene copolymer, a propylene-butene-1 copolymer and the like. These can be used as a mixture of two or more of them.

However, the mixing ratio of the $\alpha$-olefin copolymer is preferably 10% by mass or less, and more preferably less than 5% by mass (particularly preferably 4% by mass or less), when the sum of the EAO-based copolymer (1), the crystalline polyethylenic resin (2), the conjugated diene-based block copolymer (3) and the $\alpha$-olefin copolymer is taken as 100% by mass. By adjusting it to 10% by mass or less, the particularly stable three-dimensional network structure can be obtained, and the permanent compression set of the molded article obtained by molding and electron beam irradiation thereof can be reduced.

The thermoplastic elastomer used in the present invention can contain a softening agent. Examples thereof include a paraffinic, naphthenic or aromatic mineral oil-based hydrocarbon, a low-molecular weight hydrocarbon such as a polybutene-based hydrocarbon or a polybutadiene-based hydrocarbon, and the like. Above all, a mineral oil-based hydrocarbon is preferred, and one having a weight average molecular weight of 300 to 2,000, particularly 500 to 1,500 is particularly preferred. The softening agent for rubber comprising the mineral oil-based hydrocarbons is generally a mixture of three of an aromatic ring component, a naphthene ring component and a paraffin chain component. One in which the number of carbon atoms of the paraffin chain accounts for 50% or more of the total number of carbon atoms is classified into a paraffinic oil, one in which the number of carbon atoms of the naphthene ring accounts for 30 to 45% of the total number of carbon atoms is classified into a naphthenic oil, and one in which the number of carbon atoms of the aromatic ring accounts for 30% or more of the total number of carbon atoms is classified into an aromatic oil. In the present invention, the paraffinic oil is preferred, and a hydrogenated paraffinic oil is more preferred. Further, the mineral oil-based hydrocarbon preferably has a dynamic viscosity at 40°C of 20 to 800 cSt, particularly 50 to 600 cSt, and a fluidity point of -40 to 0°C, particularly -30 to 0°C.

The content thereof is preferably 200 parts by mass or less (more preferably 100 parts by mass or less, and still more preferably 50 parts by mass or less), when the sum of the EAO-based copolymer (1), the crystalline polyethylenic resin (2) and the conjugated diene-based block copolymer (3) is taken as 100 parts by mass.

Processability and flexibility can be improved by allowing the softening agent to be contained. The addition method and addition step are not limited.

Preparation Method of Thermoplastic Elastomer Composition

The preparation method of the thermoplastic elastomer composition is not particularly limited, as long as the EAO-based copolymer (1), the crystalline polyethylenic resin (2), the conjugated diene-based block copolymer (3) and other components used as needed can be well dispersed, and the thermoplastic elastomer composition is obtained by dynamically heat treating them.

The above-mentioned term "dynamically heat treating" means performing both the application of shearing force and heating. The dynamic heat treatment can be performed using, for example, a melt kneader. Of these, apparatuses which can perform kneading include, for example, an open type apparatus such as a mixing roll, a closed type apparatus such as a Banbury mixer, a single-screw extruder, a double-screw extruder or a kneader, and the like. Of these, a single-screw extruder and/or a double-screw extruder are preferably used from the viewpoints of economical efficiency, treating efficiency and the like. The treatment conducted by this kneader may be either of the batch type or of the continuous type.

The above-mentioned continuous type extruder is not particularly limited, as long as it can melt-knead the above-mentioned thermoplastic elastomer composition, and examples thereof include a single-screw extruder, a double-screw extruder, a double-screw rotor type extruder and the like. Of these, a double-screw extruder is preferably used. Above all, a double-screw extruder having an L/D (a ratio of an effective screw length L to an external diameter D) of 30 or more, more preferably 36 to 60, is preferably used.

As such a double-screw extruder, there can be used any double-screw extruder, for example, with two screws meshed with each other or with two screws not meshed. However, more preferred is an extruder in which two screws rotate in the same direction and are meshed with each other. Such double-screw extruders include GT·PCM manufactured by Ikegai Corporation, KTX·LCM·NCM manufactured by Kobe Steel, Ltd., TEX·CIM·CMP manufactured by The Japan Steel Works Ltd., TEM manufactured by Toshiba Machine Co., Ltd., ZSK manufactured by Warner Inc. (all are trade names) and the like.

The treating temperature in the above-mentioned dynamic heat treatment is from 120 to 350°C, and preferably from 150 to 290°C, and the treating time is from 20 seconds to 320 minutes, and preferably from 30 seconds to 25 minutes. Further, for the sharing force applied to the mixture, the shear rate is from 10 to 20,000/sec, and preferably from 100 to 10,000/sec.

This thermoplastic elastomer composition can contain a polymer compound selected from thermoplastic resins and rubbers described below and various additives in such amounts that the mechanical strength, flexibility and moldability of the molded article finally obtained of the present invention are not impaired.

There is no particular limitation on such a polymer compound, as long as it is other than the specific functional group-containing copolymer, and various compounds can be used. Specific examples thereof include an ionomer, an aminoacrylamide polymer, polyethylene and a maleic anhydride graft polymer thereof, polyisobutylene, an ethylene-vinyl chloride polymer, an ethylene-vinyl alcohol polymer, an ethylene-vinyl acetate copolymer, polyethylene oxide, an ethylene-acrylic acid copolymer, polypropylene and a maleic anhydride graft polymer thereof, an atactic poly-1-butene homopolymer, an α-olefin copolymer resin (a copolymer of propylene (50 mol% or more) and another α-olefin (such as ethylene, 1-butene, 1-pentene, 1-hexene, 4-methyl-1-pentene, 1-octene or 1-decene), or a copolymer of 1-butene (50 mol% or more) and another α-olefin (such as ethylene, propylene, 1-pentene, 1-hexene, 4-methyl-1-pentene, 1-octene or 1-decene)), polyisobutylene and a maleic anhydride graft polymer thereof, chlorinated polypropylene, a 4-methylpenetene-1 resin, polystyrene, an ABS resin, an ACS resin, an AS resin, an AES resin, an ASA resin, an MBS resin, an acrylic resin, a methacrylic resin, a vinyl chloride resin, a vinylidene chloride resin, a polyamide resin, a polycarbonate, an acrylic resin, a methacrylic resin, a vinyl chloride resin, a vinylidene chloride resin, a vinyl alcohol resin, a vinyl acetal resin, a methyl methacrylate resin, a fluororesin, a polyether resin, polyethylene terephthalate, a polyacrylic ester, a polyamide resin, an ethylene·α-olefin copolymer rubber and a maleic anhydride graft polymer thereof, an ethylene·α-olefin·non-conjugated diene copolymer rubber, a styrene-butadiene rubber and a hydrogenated product thereof, a maleic anhydride graft polymer of a hydrogenated product of a styrene-butadiene rubber, a butadiene rubber and a hydrogenated product thereof, a maleic anhydride graft polymer of a hydrogenated product of a butadiene rubber, a polyisobutylene-isopreprene copolymer, an isoprene rubber and a hydrogenated product thereof, a maleic anhydride graft polymer of a hydrogenated product of an isoprene rubber, a styrene-isoprene rubber and a hydrogenated product thereof, a maleic anhydride graft polymer of a hydrogenated product of a styrene-isoprene rubber, a nitrile rubber and a hydrogenated product thereof, an acrylic rubber, a silicone rubber, a fluororubber, a butyl rubber, a natural rubber, a chlorinated polyethylene-based thermoplastic elastomer, a syndiotactic 1,2-polybutadiene, a hydrogenated product of a styrene-butadiene block copolymer, a hydrogenated product of a styrene-isoprene conjugated diene-based block copolymer, a simple blend type olefinic thermoplastic elastomer, an implant type olefinic thermoplastic elastomer, a dynamically crosslinked type olefinic thermoplastic elastomer, a polyvinyl chloride-based thermoplastic elastomer, a polyurethane-based thermoplastic elastomer, a polyester-based thermoplastic elastomer, a polyamide-based thermoplastic elastomer and a fluorine-based thermoplastic elastomer, and a crystalline/amorphous α-olefin polymer such as polypropylene or a propylene-butene-1 copolymer resin is preferred.

These polymer compounds can be used either alone or as a combination of two or more of them.

The ratio of the polymer compound used is 300 parts by mass or less, and preferably from 1 to 200 parts by mass, based on 100 parts by mass of the specific functional group-containing copolymer.

Further, as the various additives, there can be added, for example, an antioxidant, an antistatic agent, a blocking agent, sealing property improver, a lubricant, a stabilizer such as an antiaging agent, a thermal stabilizer, an antiweathering agent, a metal deactivator, an ultraviolet absorber, a light stabilizer or a copper poisoning inhibitor, an antibacterial/mildewproofing agent, a dispersant, a plasticizer, a crystal nucleating agent, a flame retardant, a stickiness provider, a foaming assistant, a colorant such as titanium oxide or carbon black, a pigment, a metal powder such as ferrite, an inorganic fiber such as glass fiber or metal fiber, carbon fiber, an organic fiber such as aramid fiber, a composite fiber, an inorganic whisker such as potassium titanate whisker, a filler such as glass beads, glass balloons, glass flakes, asbestos, mica, calcium carbonate, talc, wet-process silica, dry-process silica, alumina, alumina silica, calcium silicate, hydrotalcite, caolin, diatomaceous earth, graphite, pumice, ebonite powder, cotton flock, cork powder, barium sulfate, a fluororesin or polymer beads, or a mixture thereof, a filler such as polyolefin wax, cellulose powder, rubber powder or wood powder, a low molecular weight polymer and the like.

Molding of Molded Article before Irradiation

In order to obtain the thermoplastic elastomer composition molded article of the present invention, a molded article before irradiation is first prepared using the composition obtained as described above.

There is no particular limitation on the molding process, and, for example, an extrusion molding process, a calender molding process, a solvent cast process, an injection molding process, a vacuum molding process, a powder slush molding process and a hot press process can be suitably utilized.

Further, the molded article before irradiation can also be produced by performing the above-mentioned step of preparing the thermoplastic elastomer composition in which the composition (1), the composition (2), the composition (3) and the other components used as needed are mixed under appropriate conditions and the molding step as a unitary step.

The form of the molded article may be any of a tube, a hose, a sheet, a film, a belt and a three-dimensional molded article, and may be either a solid article or a foam. Further, it may be a combined form thereof. Furthermore, the molded article may be molded continuously or by a batch process.

The foam can be produced as described below, although there is no particular limitation thereon.

Foaming of Thermoplastic Elastomer Composition

The foam as a material for the molded article of the present invention can be obtained by blending a foaming agent with the thermoplastic elastomer composition so as to give an expansion ratio of usually 1.2 to 20, preferably 1.4 to 10, and then, performing expansion. In this case, the molded article formed of the foam can be obtained simultaneously with expansion and molding.

The above-mentioned foaming agents include a thermal decomposition type foaming agent, an evaporation type foaming agent, a hollow particle type foaming agent, a supercritical fluid and the like. The foaming agent can be selected by a production method. These foaming agents may be used either alone or as a mixture of two or more of them.

The thermal decomposition type foaming agents include a nitroso-based foaming agent such as N,N'-dinitrosopentamethylenetetramine or N,N'-dimethyl-N,N'-dinitroso-terephthalamide, an azo-based foaming agent such as azodicarbonamide, barium azodicarboxylate or barium azodicarboxylate, a sulfohydrazide-based foaming agent such as p,p-oxybisbenzenesulfonylhydrazide, 4,4'-oxybis(benzene-sulfonylhydrazide) or p-toluenesulfonylylsemicarbazide, a triazine-based foaming agent such as trihydrazinotriazine, a tetrazole-based foaming agent such as 5-phenyltetrazole, azobistetrazolediguanidine or azobistetrazoleaminoguanidine, and an inorganic foaming agent such as sodium hydrogen carbonate.

These foaming agents may be used as a mixture of two or more of them.

Although the amount of these thermal decomposition type foaming agents added may be selected depending on the kind of foaming agent so as to give an expansion ratio within the above-mentioned range, it is preferably from 0.1 to 100 parts by mass based on 100 parts by mass of the thermoplastic elastomer composition.

Further, the evaporation type foaming agents include, for example, an aliphatic hydrocarbon such as propane, butane or pentane; an alicyclic hydrocarbon such as cyclobutane, cyclopentane or cyclohexane; a halogenated hydrocarbon such as chlorodifluoromethane, difluoromethane, trifluoromethane, trichlorofluoromethane, dichloromethane, dichlorofluoromethane, dichlorodifluoromethane, trichlorofluoromethane, chloromethane, chloroethane, dichlorotrifluoroethane, dichlorofluoroethane, chlorodifluoroethane, dichloropentafluoroethane, pentafluoroethane, trifluoroethane, dichlorotetrafluoroethane, trichlorotrifluoroethane, tetra-chlorodifluoroethane, chloropentafluoroethane or perfluorocyclobutane; an inorganic gas such as carbon dioxide, nitrogen or air; water and the like.

These foaming agents may be used as a mixture of two or more of them.

Although the amount of these evaporation type foaming agents added may be selected depending on the kind thereof so as to give an expansion ratio within the above-mentioned range, it is preferably from 0.1 to 100 parts by mass based on 100 parts by mass of the thermoplastic elastomer composition.

Further, the foam can also be formed using the supercritical fluid. The supercritical fluids include, for example, nitrogen and carbon dioxide. These supercritical fluids may be used as a mixture of two or more of them. The gas injection rate at the time when expansion is performed using these supercritical fluids varies depending on the kind of supercritical fluids, and it may be selected so as to give an expansion ratio within the above-mentioned range.

Further, the hollow particle type foaming agent is thermally expandable thermoplastic resin microspheres each involving a expanding agent and having a thermoplastic resin as an outer shell. The expanding agents constituting the hollow particle type foaming agent include the same as described for the above-mentioned evaporation type foaming agent. The ratio of the expanding agent occupied in the thermally expandable microspheres is preferably from 5 to 30 parts by mass.

On the other hand, the thermoplastic resins include a thermoplastic resin such as a homopolymer or copolymer comprising (meth)acrylonitrile, a (meth)acrylate, halogenated vinyl, halogenated vinylidene, a styrenic monomer, vinyl acetate, butadiene, chloroprene, vinylpyridine or the like. This thermoplastic resin may be crosslinked or made crosslinkable with a crosslinking agent such as divinylbenzene, ethylene glycol (meth)acrylate, triethylene glycol di(meth)acrylate, trimethylolpropane tri(meth)acrylate, 1,3-butylene glycol di(meth)acrylate, allyl (meth)acrylate, triacrylformal or triallyl isocyanurate. It is preferred that the mass average particle size of the hollow particle type foaming agent (in an unexpanded microsphere state) is usually from 1 to 100 $\mu$m.

Although the amount of these hollow particle type foaming agents added may be selected depending on the kind thereof so as to give an expansion ratio within the above-mentioned range, it is preferably from 0.1 to 100 parts by mass based on 100 parts by mass of the thermoplastic elastomer composition.

In these foaming agents (the thermal decomposition type foaming agent, evaporation type foaming agent, hollow particle type foaming agent and supercritical fluid), a foaming nucleating agent such as sodium bicarbonate, citric acid or talc may be used together as needed, in order to adjust the size of bubbles formed.

It is preferred that this foaming nucleating agent is usually added in an amount of 0.01 to 10 parts by mass based on 100 parts by mass of the thermoplastic elastomer composition.

The foam obtained from the above-mentioned thermoplastic elastomer composition has a three-dimensional network structure not based on chemical crosslinking, is excellent in elastic recovery and flexibility, is uniformly expanded, has high closed-cell properties, is uniform in the shape and size of expanded bubbles, and is excellent in surface appearance. It is therefore suitable as the material for the foam of the present invention obtained by electron beam irradiation.

Molding of Foam Molded Article before Irradiation

Further, there is no particular limitation on an addition method of the foaming agent and a molding method of the foam (that is to say, a production method of a foam molded article before irradiation). Examples thereof include the following methods:

(1) A method of melt-kneading the thermoplastic elastomer composition and the foaming agent in a melt extruder, followed by extrusion;
(2) A method of adding the foaming agent to the thermoplastic elastomer composition by dry blend, and extruding the resulting blend through a melt extruder;
(3) A method of pressing the foaming agent into the thermoplastic elastomer composition in a molten state in a melt extruder, followed by extrusion;
(4) A method of adding the foaming agent to the thermoplastic elastomer composition, followed by injection molding;
(5) A method of melt-kneading the thermoplastic elastomer composition and the foaming agent in a melt extruder, followed by injection molding;
(6) A method of melt-kneading the thermoplastic elastomer composition and the foaming agent in a melt extruder, then, putting the kneaded product in a press die, and performing heat press molding; and

(7) A method of melt-kneading the thermoplastic elastomer composition and the foaming agent in a batch type kneader, and then, performing calender molding, followed by heating.

The extrusion molding methods of (1) to (3) are preferred among others.

When the foam molded article before irradiation is produced by the extrusion molding method, the optimum temperature and residence time are appropriately determined depending on the expansion ratio, the kind and amount of thermoplastic elastomer components, the kind and amount of foaming agent, and the like. However, the residence time is usually from 15 seconds to 5 minutes at a temperature of 140 to 280˚C.

Electron Beam Irradiation

The molded article of the present invention is obtained by irradiating the above-mentioned molded article before irradiation with an electron beam. The thermoplastic elastomer composition used in the present invention has the three-dimensional network structure not based on chemical crosslinking, and is excellent in elastic recovery and flexibility. When the electron beam is irradiated thereon, a three-dimensional crosslinked structure is formed by radical reaction of non-conjugated diene and ethylene components in the thermoplastic elastomer composition, which further increases elastic recovery. Further, in the present invention, crosslinking is performed by electron beam irradiation, so that there is no contamination with a crosslinking agent.

The electron beam has permeability to a synthetic resin, and the degree of the permeation depends on the thickness of the synthetic resin and kinetic energy of the electron beam.

When the energy of the electron beam is controlled so as to be uniformly permeable in the thickness direction according to the irradiation thickness thereof, the molded article in which the degree of crosslinking is made uniform in the thickness direction can be obtained.

The electron beam acceleration voltage is preferably from 100 to 2,000 kV, and more preferably from 200 to 1,000 kV, to the above-mentioned molded article. Less than 100 kV is unfavorable, because the ratio of electrons captured and absorbed by a surface layer portion relatively increases to decrease the electron beam which permeates the molded article, which causes delay in crosslinking of the inside, compared to the surface layer portion, resulting in the occurrence of the difference in the degree of crosslinking. On the other hand, exceeding 2,000 kV unfavorably results in the occurrence of decreased mechanical strength induced by molecular scission.

Further, for the electron beam dose in this case, the electron beam is irradiated preferably within the range of 10 to 1,000 kGy (Gy: gray, J/kg), more preferably within the range of 100 to 800 kGy, thereby performing hardening by crosslinking. Less than 10 kGy unfavorably results in the decreased degree of crosslinking, whereas exceeding 1,000 kGy unfavorably results in the occurrence of decreased mechanical strength induced by molecular scission.

The crosslinking effect by electron beam irradiation can be represented by the product of the electron beam acceleration voltage and the irradiation dose. In the present invention, the product of the electron beam acceleration voltage (kV) and the irradiation dose (kGy) is adjusted to preferably 1,000 to 2,000,000 (kV·kGy), and more preferably 10,000 to 500,000 (kV·kGy). Less than 1,000 (kV·kGy) is unfavorable, because the ratio of electrons captured and absorbed by a surface layer portion relatively increases to decrease the electron beamwhich permeates the molded article, which causes delay in crosslinking of the inside, compared to the surface layer portion, resulting in the occurrence of the difference in the degree of crosslinking. On the other hand, exceeding 2,000,000 (kV·kGy) unfavorably results in the occurrence of decreased mechanical strength induced by molecular scission.

Improvement in rubber elasticity can be obtained only by electron beam crosslinking. However, in order to further enhance rubber elasticity, a crosslinking assistant may be added to the above-mentioned thermoplastic elastomer composition which is a raw material for the molded article of the present invention.

The amount added is from 0.01 to 10 parts by mass, and preferably from 0.1 to 5 parts by mass, when the sum of the above-mentioned ethylene·α-olefin-based copolymer (1), the above-mentioned crystalline polyethylenic resin (2) and the above-mentioned conjugated diene-based block copolymer (3) is taken as 100 parts by mass. When it is less than 0.01 parts by mass, the effect of further improving rubber elasticity is not observed. On the other hand, even when the crosslinking assistant is added in an amount exceeding 10 parts by mass, the effect of improving rubber elasticity is saturated.

The above-mentioned crosslinking assistants include, for example, sulfur or a sulfur compound such as powdered sulfur, colloidal sulfur, precipitated sulfur, insoluble sulfur, surface-treated sulfur or dipentamethylenethiuram tetrasulfide, an oxime compound such as p-quinone oxime or p,p'-dibenzoylquinone oxime, a polyfunctional monomer such as ethylene glycol di (meth) acrylate, diethylene glycol di (meth)-acrylate, triethylene glycol di(meth)acrylate, tetraethylene glycol di(meth)acrylate, 1,4-butanediol di(meth)acrylate, 1,6-hexanediol di(meth)acrylate, 1,9-nonanediol di (meth)-acrylate, glycerol di (meth) acrylate, polyethylene glycol (PEG #200) di(meth)acrylate, polyethylene glycol (PEG #400) di(meth)acrylate, polyethylene glycol (PEG #600) di(meth)acrylate, trimethylolpropane tri(meth)acrylate, pentaerythritol tri(meth)acrylate, dipentaerythritol hexa-(meth)acrylate, neopentyl glycol di(meth)acrylate, diallyl phthalate, tetraallyloxyethane, triallyl isocyanurate, N,N'-m-phenylenebismaleimide, N,N'-toluylene bismaleimide, maleic anhydride, divinylbenzene, 2,4,6-trimercapto-S-triazine or isocyanuric acid, and a metal compound such as zinc methacrylate, magnesium methacrylate, zinc dimethacrylate or magnesium dimethacrylate. Of these crosslinking assistants, p,p'-dibenzoylquinone oxime, N,N'-m-phenylenebismaleimide, trimethylolpropane tri(meth)acrylate and divinylbenzene are preferred.

The above-mentioned crosslinking assistants can be used either alone or as a combination of two or more of them.

The crosslinking assistant may be added either in the production of the thermoplastic elastomer composition or after the production of the thermoplastic elastomer composition.

As for an addition method, the thermoplastic elastomer composition and the crosslinking assistant may be mixed with each other by dynamic heat treatment, or the crosslinking assistant may be only simply mixed with the thermoplastic elastomer composition.

In the irradiation with the electron beam, when the molded article has a three-dimensional shape such as a tube shape, it is preferred that the molded article is irradiated while being rotated. Such irradiation makes it possible to uniformly irradiate the whole surface of the molded article with the electron beam, thereby being able to perform uniform sufficient crosslinking.

In one having a sheet shape or a film shape, it is preferred that both sides, the front and back, are irradiated. The irradiation can be performed back and forth or alternately reversing the front and back, thereby being able to perform sufficient irradiation uniformly on the surface.

Further, the irradiation may be performed either continuously or by a batch process, after extrusion molding.

The molded article before irradiation is subjected to the electron beam irradiation as described above, whereby the permanent compression set of the molded article after electron beam irradiation can be reduced compared to that before electron beam irradiation.

Further, in the molded article of the present invention after electron beam irradiation, the cyclohexane insoluble matter is usually from 50 to 100% by mass, preferably from 60 to 100% by mass, and more preferably from 70 to 100% by mass. The cyclohexane insoluble matter is a barometer showing how much the thermoplastic elastomer composition has been crosslinked by irradiating the molded article with the electron beam.

Here, the cyclohexane insoluble matter has been calculated as described below.

About 200 mg of the molded article of the present invention is weighed and cut into small pieces. The resulting small pieces are immersed in 100 ml of cyclohexane for 48 hours in an airtight container. Then, this sample is taken out on filter paper, and dried under reduced pressure at 105°C for 1 hour in a vacuum dryer. The value obtained by subtracting (a) the mass of cyclohexane insoluble matters (the filler, the pigment and the like) other than the ethylene-$\alpha$-olefin-based copolymer (1), the crystalline polyethylenic resin (2) and the conjugated diene-based block copolymer (3) and (b) the mass of the crystalline polyethylenic resin (2) and the conjugated diene-based block copolymer (3) in the sample before cyclohexane immersion from the mass of this dry residue is taken as "corrected final mass (p)".

On the other hand, the value obtained by subtracting (c) the mass of cyclohexane soluble matters (for example, the mineral oil-based softening agent) other than the ethylene-$\alpha$-olefin-based copolymer (1), the crystalline polyethylenic resin (2) and the conjugated diene-based block copolymer (3), (a) the mass of cyclohexane insoluble matters (the filler, the pigment and the like) other than the ethylene-$\alpha$-olefin-based copolymer (1), the crystalline polyethylenic resin (2) and the conjugated diene-based block copolymer (3) and (d) the sum of the crystalline polyethylenic resin (2) and the conjugated diene-based block copolymer (3) from the mass of the sample before measurement is taken as "corrected initial mass (q)".

Here, the cyclohexane insoluble matter as crosslinking density is found from the following equation.

When the $\alpha$-olefinic polymer resin (such as polypropylene) is added as the other component, calculation is made dealing with it similarly to the crystalline polyethylenic resin (2).

$$\text{Cyclohexane insoluble matter [mass \%]} = [\{\text{corrected final mass (p)}\} \div \{\text{corrected initial mass (q)}\}] \times 100$$

When the cyclohexane insoluble matter of the molded article after crosslinking by electron beam irradiation is less than 50% by mass, crosslinking by electron beam irradiation is insufficient, resulting in inferior rubber elasticity. The above-mentioned cyclohexane insoluble matter is easily controllable by adjusting the above-mentioned product of the electron beam acceleration voltage (kV) and the irradiation dose (kGy) to 1,000 to 2,000,000 (kV·kGy).

The molded article of the present invention thus obtained is excellent in elasticity and extremely low in permanent compression set.

The above-mentioned thermoplastic elastomer composition molded article can be converted to a processed good by processing such as lamination or bonding with a rubber, a plastic, a thermoplastic elastomer composition other than the present invention, a glass, a metal, a cloth, a wood or the like.

The rubbers as used herein include an ethylene·$\alpha$-olefin copolymer rubber and a maleic anhydride graft polymer thereof, an ethylene·$\alpha$-olefin·non-conjugated diene copolymer rubber, a styrene-butadiene rubber, a butadiene rubber, an isoprene rubber, a nitrile rubber and a hydrogenated product thereof, an acrylic rubber, a silicone rubber, a fluororubber, a butyl rubber, a natural rubber and the like.

The plastics include an ionomer, an aminoacrylamide polymer, polyethylene and a maleic anhydride graft polymer thereof, polyisobutylene, an ethylene-vinyl chloride polymer, an ethylene-vinyl alcohol polymer, an ethylene-vinyl acetate copolymer, polyethylene oxide, an ethylene-acrylic acid copolymer, polypropylene and a maleic anhydride graft polymer thereof, polyisobutylene and a maleic anhydride graft polymer thereof, chlorinated polypropylene, a 4-methylpenetene-1 resin, polystyrene, an ABS resin, an ACS resin, an AS resin, an AES resin, an ASA resin, an MBS resin, an acrylic resin, a methacrylic resin, a vinyl chloride resin, a vinylidene chloride resin, a polyamide resin, a polycarbonate, an acrylic resin, a methacrylic resin, a vinyl chloride resin, a vinylidene chloride resin, a vinyl alcohol resin, a vinyl acetal resin, a methyl methacrylate resin, a fluororesin, a polyether resin, polyethylene terephthalate, a polyacrylic ester, a polyamide resin, a polyurethane, a polyimide, a polyurea resin, an epoxy resin, a phenol resin, a urea resin, polybutene-1, a methylpentene resin, polyacrylonitrile and the like.

The thermoplastic elastomers include a chlorinated polyethylene-based thermoplastic elastomer, a syndiotactic 1,2-polybutadiene, a simple blend type olefinic thermoplastic elastomer, an implant type olefinic thermoplastic elastomer, a dynamically crosslinked type olefinic thermoplastic elastomer, a polyvinyl chloride-based thermoplastic elastomer, a polyurethane-based thermoplastic elastomer, a polyester-based thermoplastic elastomer, a polyamide-based thermoplastic elastomer, a fluorine-based thermoplastic elastomer, a hydrogenated product of a styrene-butadiene rubber, a maleic anhydride graft polymer of a hydrogenated product of a styrene-butadiene rubber, a hydrogenated product of a butadiene rubber, a maleic anhydride graft polymer of a hydrogenated product of a butadiene rubber, a hydrogenated product of an isoprene rubber, a maleic anhydride graft polymer of a hydrogenated product of an isoprene rubber, a hydrogenated product of a styrene-isoprene rubber, a maleic anhydride graft polymer of a hydrogenated product of a styrene-isoprene rubber, a hydrogenated product of a styrene-butadiene block copolymer, a hydrogenated product of a styrene-isoprene block copolymer and the like.

The metals include stainless steel, aluminum, iron, copper, nickel, zinc, lead, tin, an alloy used in automobiles, ships and vessels, home electric appliances or the like, such as a nickel-zinc alloy, an iron-zinc alloy or a lead-tin alloy, and the like.

Examples

The present invention will be illustrated in detail with reference to the following examples and comparative example, but the present invention should not be construed as being limited thereto.

[1] Preparation of Thermoplastic Elastomer Composition Molded Articles

Example 1

Fifty-eight parts by mass of an oil-extended ethylene-propylene-5-ethylidenenorbornene copolymer rubber (manufactured by JSR Corp., name of product: "EP98A", ethylene content: 79 mol%, propylene content: 21 mol%, iodization: 15, paraffinic oil 75 phr oil extended) as the ethylene·$\alpha$-olefinic copolymer (1), 21 parts by mass of linear low density polyethylene (LLDPE) (manufactured by Nippon Polychem Co., name of product: "Novatec LL UF423", crystallinity: 40%, melting point by DSC: 124˚C) as the crystalline polyethylenic resin (2), 21 parts by mass of the conjugated diene-based block copolymer (3) shown below, 5 parts by mass of crystalline polypropylene (manufactured by Nippon Polychem Co., name of product: "Novatec PP BC5CW", crystallinity: 70%) as the $\alpha$-olefinic polymer and 0.2 part by mass of a tetraester type high molecular hindered phenol-based antioxidant (manufactured byCiba SpecialtyChemicals Co. , name of product: "Irganox1010") as the antiaging agent were mixed and melt-kneaded in a 10-liter pressurized kneader (manufactured by Moriyama Company Ltd.) at a preset temperature of 150˚C at 40 rpm (a shear rate of 200/sec) for a kneading time of 15 minutes. The resulting composition in a molten bulk state was pelletized with a feeder-ruder (manufactured by Moriyama Company Ltd.) to obtain a desired thermoplastic elastomer composition. Then, using the resulting thermoplastic elastomer composition, a sheet-shaped molded article before irradiation having a thickness of 2 mm, a length of 120 mm and a width of 120 mm was prepared with an injection molding machine (manufactured by Toshiba Machine Co., Ltd., type: "IS-90B"). Electron beam irradiation was conducted thereon under an atmosphere of nitrogen using an electron beam irradiation apparatus (manufactured by Nisshin High Voltage Corporation, name of product: "ESP300-60") to obtain a thermoplastic elastomer composition molded article of the present invention. Specifically, treatment of an electron beam acceleration voltage of 300 kV and an irradiation dose of 500 kGy was conducted on both sides of the sheet.

Conjugated diene-based block copolymer (3);

This is one obtained by a method shown below.

Cyclohexane (24 kg), tetrahydrofuran (1g), 1, 3-butadiene (1,200 g) and n-butyllithium (3.3 g) were added to a reaction vessel with an internal volume of 50 liters which was nitrogen-replaced inside, and subjected to adiabatic polymerization from 70°C. After completion of the reaction, the temperature was kept at 5°C, and tetrahydrofuran (340 g) and 1, 3-butadiene (2,800 g) were added to conduct reaction for 15 minutes.

After completion of the reaction, hydrogen gas was supplied at a pressure of 0.4 MPa-G, followed by stirring for 20 minutes, and allowed to react with polymer end lithium living as a living anion to prepare hydrogenated lithium.

The temperature of the reaction solution was elevated to 90°C, and tetrachlorosilane (7.2 g) was added, followed by stirring for about 20 minutes. Then, a hydrogenation catalyst mainly composed of a titanocene compound was added, and hydrogenation reaction was conducted at a hydrogen pressure of 0.8 MPa for 2 hours.

At the time when the absorption of hydrogen was completed, the reaction solution was returned to ordinary temperature and normal pressure, and taken out of the reaction vessel. Then, the reaction solution was poured into water with stirring to remove the solvent by steam distillation, thereby obtaining a hydrogenated block polymer of an A-B-A structure (A is polybutadiene whose 1,2-vinyl bond content is low, and B is polybutadiene whose 1,2-vinyl bond content is high), which is the hydrogenated diene-based polymer.

The hydrogenation rate of the resulting hydrogenated conjugated diene-based block copolymer was 99%, the weight average molecular weight was 300,000, the vinyl bond content of the first polybutadiene block A of the polymer before hydrogenation was 15%, and the vinyl bond content of the second polybutadiene block B of the polymer before hydrogenation was 78%. Further, the melt flow rate of the polymer after hydrogenation measured at 230°C and 21.2 N was 2.5 g/10 min.

Example 2

All were conducted in the same manner as with Example 1 with the exception that one part by mass of trimethylolpropane trimethacrylate (manufactured by Kyoeisha Chemical Co., Ltd., name of product: "Lightester TMP") was added as the crosslinking assistant.

Comparative Example 1

All were conducted in the same manner as with Example 1 with the exception that electron beam irradiation was not performed.

Respective raw materials shown in Table 1 are as follows: Ethylene·α-olefinic copolymer (1);

Oil-extended ethylene-propylene-5-ethylidene-norbornene copolymer rubber (manufactured by JSR Corp., name of product: "EP98A", ethylene content: 79 mol%, propylene content: 21 mol%, iodization: 15, paraffinic oil 75 phr oil extended)

Crystalline polyethylenic resin (2);

Linear low density polyethylene (LLDPE) (manufactured by Nippon Polychem Co., name of product: "Novatec LL UF423", crystallinity: 40%, melting point by DSC: 124°C)

Conjugated diene-based block copolymer (3);

Hydrogenated conjugated diene-based block copolymer obtained by the method shown in Example 1. The hydrogenation rate was 99%, the weight average molecular weight was 300, 000, the vinyl bond content of the first polybutadiene block A of the polymer before hydrogenation was 15%, and the vinyl bond content of the second polybutadiene block B of the polymer before hydrogenation was 78%. Further, the melt flow rate of the polymer after hydrogenation measured at 230°C and 21.2 N was 2.5 g/10 min.

Other components

α-Olefinic polymer;

Crystalline polypropylene (manufactured by Nippon Polychem Co., name of product: "Novatec PP BC5CW", crystallinity: 70%)

Antiaging agent;

Tetraester type high molecular hindered phenol-based antioxidant (manufactured by Ciba Specialty Chemicals Co., name of product: "Irganox 1010")

Crosslinking assistant

Trimethylolpropane trimethacrylate (manufactured by Kyoeisha Chemical Co., Ltd., name of product: "Lightester TMP")

[2] Evaluation of Thermoplastic Elastomer Composition Molded Articles

a) Evaluation of the Presence or Absence of Three-Dimensional Network Structure

The resulting sheet-shaped thermoplastic elastomer composition molded article before irradiation was sliced with a microtome to prepare a thin membrane section in a thickness direction, and then, dyed with $RuO_4$ or the like. Then, a photograph with a magnification of 2,000 was taken under a transmission electron microscope, and the presence or absence of the formation of a three-dimensional network structure was confirmed from this photograph.

Respective measurement values were measured by the following methods:

(1) Dulometer A hardness; measured in accordance with JIS-K6253, and used as an index of flexibility.
(2) Permanent compression set; measured in accordance with JIS-K 6262, and used as an index of rubber elasticity.
(3) Cyclohexane insoluble matter; the measuring method was already shown in the specification.
(4) Oil resistance; a method according to JIS-K 6258 (IRM903 oil, room temperature, immersed for 24 hours).
(5) Scratch resistance test; a surface was scratched with a nail of a thumb, and the degree of scratches was visually evaluated according to the following criteria:

○: not get scratched
x: get scratched

From the results of Table 1, in both the examples with respect to the articles of the present invention, the thermoplastic elastomer composition molded articles are obtained which are low in permanent compression set, have excellent elastic recovery, are excellent in oil resistance and scratch resistance and also keep flexibility, compared to the comparative example. In both Examples 1 and 2 of Table 1, a three-dimensional network structure was confirmed in the electron micrograph.
[Table 1]

| Composition No. | | | Example | | Comparative Example |
|---|---|---|---|---|---|
| | | | 1 | 2 | 1 |
| Composition | Ethylene·α-Olefinic Copolymer (1) | | 58 | 58 | 58 |
| | Crystalline Polyethylenic Resin (2) | | 21 | 21 | 21 |
| | Block Copolymer (3) | | 21 | 21 | 21 |
| | Others | α-Olefinic Polymer | 5 | 5 | 5 |
| | | Antiaging Agent | 0.2 | 0.2 | 0.2 |
| | | Crosslinking Assistant | | 1 | |
| Irradiation Conditions | Acceleration Voltage | kV | 300 | 300 | 0 |
| | Irradiation Dose (one side) | kGy | 500 | 500 | 0 |
| Physical Properties | JIS-A Hardness | - | 70 | 71 | 72 |
| | Permanent Compression Set | % | 29 | 24 | 42 |
| | Cyclohexane Insoluble Matter | % | 95 | 100 | 48 |
| | Oil Resistance ($\Delta V$) | % | 27 | 22 | 66 |
| | Scratch Resistance | - | ○ | ○ | × |

Industrial Applicability

The thermoplastic elastomer composition molded article of the present invention is excellent in elasticity and extremely low in permanent compression set, and has excellent elastic recovery, flexibility, scratch resistance, oil resistance and appearance, so that it can be suitably used as processed goods shown below.
That is to say, it can be widely used as general processed goods such as automotive external and internal surface materials such as a bumper, an external lace, a window sealing gasket, a door sealing gasket, a trunk sealing gasket, a roofside rail, an emblem, an inner panel, a door trim and a console box, a weather strip and the like, an automotive or motorbike sheet cushion, a leather sheet requiring scratch resistance, sealants and internal and external surface materials for aircrafts and ships, sealants, internal and external surface materials or waterproof sheet materials for civil engineering and construction, sealants for general machinery and apparatus, capacitors and packing for light electric parts, water storage tank sealants, sealants, surface materials or housing for fuel cell stacks, rolls for information equipment, cleaning blades, films for electronic parts, protective films for semiconductors and liquid crystal displays in flat panel display (FPD) production processes, sealants for electronic parts such as a hard disk gasket, protective films for images such as a photograph, decorative films for building materials, parts for medical equipment, electric wire covering materials, convenience goods, caps, various industrial hoses and tubes, belts and sporting goods.

**Claims**

1. A thermoplastic elastomer composition molded article **characterized in that** a thermoplastic elastomer composition molded article is obtained by electron beam irradiation of a molded article mainly comprising a thermoplastic elastomer composition in which a crystalline polyethylenic resin (2) and a conjugated diene-based block copolymer (3) form a three-dimensional network structure in a matrix comprising an ethylene·$\alpha$-olefin-based copolymer (1).

2. The thermoplastic elastomer composition molded article according to claim 1, wherein the conjugated diene-based block copolymer (3) comprises (a) a crystalline ethylenic polymer block and (b) a block having higher compatibility with the ethylene·$\alpha$-olefin-based copolymer than compatibility with the crystalline polyethylenic resin.

3. The thermoplastic elastomer composition molded article according to claim 1 or 2, wherein the conjugated diene-based block copolymer (3) has the crystalline ethylenic polymer blocks at both ends thereof.

4. The thermoplastic elastomer composition molded article according to any one of claims 1 to 3, wherein the conjugated diene-based block copolymer (3) is obtained by hydrogenating a conjugated diene-based block copolymer in which both end blocks thereof are the following block A and an intermediate block is the following block B, when the sum of the block A and the block B is taken as 100% by mass, the block A is from 5 to 90% by mass and the block B is from 10 to 95% by mass, at least 80% of all double bonds contained in the conjugated diene-based block copolymer (3) before hydrogenation is saturated, and the number average molecular weight thereof is from 50,000 to 700,000:

   A; a butadiene polymer block having a 1,2-vinyl bond content of less than 25 mol%
   B; a conjugated diene polymer block and/or a vinyl aromatic-conjugated diene copolymer block which have a 1,2-vinyl bond content of 25 mol% or more.

5. The thermoplastic elastomer composition molded article according to any one of claims 1 to 4, wherein when the sum of the ethylene·$\alpha$-olefin-based copolymer (1), the crystalline polyethylenic resin (2) and the conjugated diene-based block copolymer (3) is taken as 100% by mass, the ethylene·$\alpha$-olefin-based copolymer (1) is from 10 to 94% by mass, the crystalline polyethylenic resin (2) is from 5 to 80% by mass, and the conjugated diene-based block copolymer (3) is from 1 to 80% by mass.

6. The thermoplastic elastomer composition molded article according to any one of claims 1 to 5, wherein when the sum of the ethylene·$\alpha$-olefin-based copolymer (1), the crystalline polyethylenic resin (2) and the conjugated diene-based block copolymer (3) is taken as 100 parts by mass, a softening agent is contained in an amount of 200 parts by mass or less.

7. The thermoplastic elastomer composition molded article according to any one of claims 1 to 6, wherein when the sum of the ethylene·$\alpha$-olefin-based copolymer (1), the crystalline polyethylenic resin (2) and the conjugated diene-based block copolymer (3) is taken as 100 parts by mass, a crosslinking assistant is further added in an amount of 0.1 to 10 parts by mass to a thermoplastic elastomer composition (4).

8. The thermoplastic elastomer composition molded article according to any one of claims 1 to 7, wherein the cyclohexane insoluble matter after electron beam irradiation is from 50 to 100% by mass.

9. The thermoplastic elastomer composition molded article according to any one of claims 1 to 8, wherein the electron beam dose is from 1,000 to 2,000,000 (kV·kGy) as the product of the electron beam acceleration voltage (kV) and the irradiation dose (kGy).

**10.** The thermoplastic elastomer composition molded article according to any one of claims 1 to 9 which is at least one selected from the group consisting of a tube, a hose, a sheet, a film, a belt and a foam thereof.

**11.** The thermoplastic elastomer composition molded article according to claim 10 which is obtained by electron beam irradiation with rotation.

**12.** A processed good obtained by processing the thermoplastic elastomer composition molded article according to any one of claims 1 to 11.

**13.** A process for producing the thermoplastic elastomer composition molded article according to any one of claims 1 to 11 comprising mixing an ethylene·α-olefin-based copolymer (1), a crystalline polyethylenic resin (2) and a conjugated diene-based block copolymer (3), dynamically heat treating the resulting mixture to obtain a thermoplastic elastomer composition, molding the thermoplastic elastomer composition, and then, subjecting the resulting molded article to electron beam irradiation.

**14.** The process for producing the thermoplastic elastomer composition molded article according to claim 13, wherein the molding is foam molding.

## INTERNATIONAL SEARCH REPORT

| | International application No. |
|---|---|
| | PCT/JP2004/016978 |

A. CLASSIFICATION OF SUBJECT MATTER
   Int.Cl⁷ C08J7/00, C08J9/04, C08L23/04, C08L23/16, C08L53/02

According to International Patent Classification (IPC) or to both national classification and IPC

B. FIELDS SEARCHED

Minimum documentation searched (classification system followed by classification symbols)
   Int.Cl⁷ C08J7/00, C08L23/00-23/36, C08L53/02

Documentation searched other than minimum documentation to the extent that such documents are included in the fields searched
   Jitsuyo Shinan Koho          1926-2004    Toroku Jitsuyo Shinan Koho    1994-2004
   Kokai Jitsuyo Shinan Koho    1971-2004    Jitsuyo Shinan Toroku Koho    1996-2004

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2001-341589 A (JSR Corp.), 11 December, 2001 (11.12.01), Claims 1 to 6 (Family: none) | 1-14 |

☐ Further documents are listed in the continuation of Box C.   ☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 06 December, 2004 (06.12.04) | 21 December, 2004 (21.12.04) |

| Name and mailing address of the ISA/ | Authorized officer |
|---|---|
| Japanese Patent Office | |
| Facsimile No. | Telephone No. |

Form PCT/ISA/210 (second sheet) (January 2004)